# EUROPEAN PATENT APPLICATION

(11) **EP 4 667 190 A1**
(43) Date of publication of application: **24.12.2025**
(21) Application number: 25179046.5
(22) Date of filing: 27.05.2025
(51) Int. Cl.: B29C 64/124, B29C 64/188, B29C 64/232, B29C 64/236, B29C 64/245, B29C 64/35, B33Y 10/00, B33Y 40/20

(54) **METHOD FOR CLEANING AN ADDITIVELY MANUFACTURED PART**

(30) Priority: 17.06.2024 US 202418745146
(71) Applicant: General Electric Company, Cincinnati, Ohio 45215 (US)
(72) Inventor: Grote, Robert L., West Chester, PA 45215 (US); Barnhill, Christopher D., West Chester, PA 45215 (US); Yang, Xi, West Chester, PA 45215 (US); Muhlenkamp, Trent W., West Chester, PA 45215 (US)
(74) Representative: Hafner & Kohl PartmbB

(57) **Abstract**

A method for cleaning an additively manufactured part, the method comprising: contacting a cast layer (102) with a build plate (110). The cast layer (102) is disposed on a first side (107) of a foil sheet (106) and has a surface height (124) spaced vertically above the foil sheet (106) along a first axis (122). The build plate (110) is vertically spaced above the foil sheet (106) along the first axis (122). The method includes moving the build plate (110) along the first axis (122) to position a build surface (114) at a cure depth (118) below the surface height (124) of the cast layer (102) to form a segment (116) of a printed part (112) on the build surface (114). The method includes moving the build plate (110) along the first axis (122) to position the segment (116) of the printed part above the cure depth (118) and translating the foil sheet (106) along a second axis (120) to clean the segment (116) of the printed part (112) within the cast layer (102).

## Description

### TECHNICAL FIELD

This disclosure relates generally to additive manufacturing, and more particularly to methods for handling curable material in additive manufacturing processes.

### BACKGROUND

Additive manufacturing is a process in which material is built up piece-by-piece, line-by-line, or layer-by-layer to form a component. Stereolithography is a type of additive manufacturing process which employs a liquid including a radiant-energy curable photopolymer resin and a curing energy source such as a laser. Similarly, digital light processing (DLP) three dimensional (3-D) printing employs a two-dimensional image projector, e.g. analog (masked light source) or digital (DLP or steerable mirror devices with light source), to build components one layer at a time. For each layer, the projector emits radiation to directly interact with the surface of the liquid or to interact with the liquid through a transparent object which defines a constrained surface of the liquid to apply a radiation pattern corresponding to a desired cross-section of the component. Exposure to the radiation cures and solidifies the pattern in the resin and joins it to a previously-cured layer.

In curing the photopolymer resin, it is preferable to have a clean build surface upon which the photopolymer resin is cured. Residual cured or partially cured products may adhere to the build surface during the formation of each printed layer and may cause unwanted roughness on the surface of the printed component. Furthermore, contaminants like secondary materials may adhere to the build surface and further disrupt the uniformity of the printed component's layered structure. The additional surface roughness created by residual cured products and/or other impurities can diminish the dimensional accuracy of each printed layer, disrupt the surface morphology, and adversely affect the density and other physical properties of the printed component.

### BRIEF DESCRIPTION OF THE DRAWINGS

The accompanying drawings illustrate various systems, apparatuses, devices and methods, in which like reference characters refer to like parts throughout, and in which:
FIG. 1 is a side view of an illustrative embodiment of an apparatus for cleaning an additively manufactured part in accordance with various disclosed aspects herein;
FIG. 2 is a side view of an illustrative embodiment of an apparatus for cleaning an additively manufactured part in accordance with various disclosed aspects herein;
FIG. 3 is a side view of an illustrative embodiment of an apparatus for cleaning an additively manufactured part in accordance with various disclosed aspects herein;
FIG. 4 is a side view of an apparatus for cleaning an additively manufactured two-phase part in accordance with various disclosed aspects herein;
FIG. 5 is a side view of an apparatus for cleaning an additively manufactured two-phase part in accordance with various disclosed aspects herein;
FIG. 6 depicts a block diagram demonstrating illustrative steps of a method for cleaning an additively manufactured part, according to one or more embodiments shown and described herein; and
FIG. 7 depicts a block diagram demonstrating illustrative steps of a method for cleaning an additively manufactured two-phase part, according to one or more embodiments shown and described herein.

The present disclosure may be embodied in several forms without departing from its spirit or essential characteristics. The scope of the present disclosure is defined in the appended clauses, rather than in the specific description preceding them. All embodiments that fall within the meaning and range of equivalency of the clauses are therefore intended to be embraced by the clauses.

### DETAILED DESCRIPTION

Conventional additive manufacturing processes employ various mechanisms and method for cleaning printed parts or a printed part layer to ensure the dimensional accuracy of the resulting additively manufactured product. Many additive manufacturing cleaning methods use a mechanical apparatus for removing uncured or partially cured materials from an additively manufactured part. For instance, an additively manufactured part may be cleaned by contacting the printed part with a blade, scraper, abrasive component, or other mechanical instrument that can physically contact the printed part and apply a shear force to remove any unwanted materials. However, mechanical scraping methods may potentially damage the printed part or may unintentionally remove the printed part or portions thereof from the build surface, interrupting the printing process. Additionally, many conventional additive manufacturing methods subject the printed part to a cleaning fluid to remove unwanted materials. Typically, the cleaning fluids may be a liquid detergent or a solvent and may be applied to the printed part by a nozzle or the printed part may be positioned within a vat or other container containing an agitated cleaning fluid. However, the use of a cleaning fluid can create additional costs and may lead to contamination if residual cleaning fluid get mixed into a cast layer. Furthermore, in the case of printed parts created from two or more cast layers, steps are taken to ensure that the cleaning process does not inadvertently transfer uncured or partially cured portions of a first material into the cast layer containing the second material. Contamination between the first material and the second material can lead to disruptions of layer uniformity in the result in printed parts with diminished density values and inferior mechanical properties.

Accordingly, a need exists for a method for cleaning an additively manufactured part that avoids the need for mechanically scraping the additively manufactured part or the need for a solvent or other additive. A cleaning method that can clean or "drag" a printed part within a liquid slurry of the cast layer may allow the system to apply an abrasive shear force on a previously cured layer to remove any uncured or partially cured materials adhering to the build surface. The use of the cleaning process can increase the accuracy of the additive manufacturing process and create printed parts with uniform surface finishes without post-processing steps, such as those that utilize a solvent. Furthermore, creating printed parts with two materials cleaning the printed part within a cast layer of an identical composition as the previously formed layer allows for the creation of materials with distinct material segregation between layers without reduction of mechanical properties in the printed part due to contamination.

Reference will now be made to illustrative embodiments, examples of which are illustrated in the accompanying drawings. It is to be understood that other embodiments may be utilized and structural and functional changes may be made. In addition, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure. It should be understood that aspects of this disclosure may be practiced with other embodiments not necessarily including all aspects described herein, etc.

As used herein, the words "example" and "exemplary" mean an instance, or illustration. The words "example" or "exemplary" do not indicate a key or preferred aspect or embodiment. The word "or" is intended to be inclusive rather an exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

As used herein, the terms "first," and "second," may be used interchangeably to distinguish one component from another and are not intended to signify location or importance of the individual components.

Approximating language, as used herein throughout the specification and clauses, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

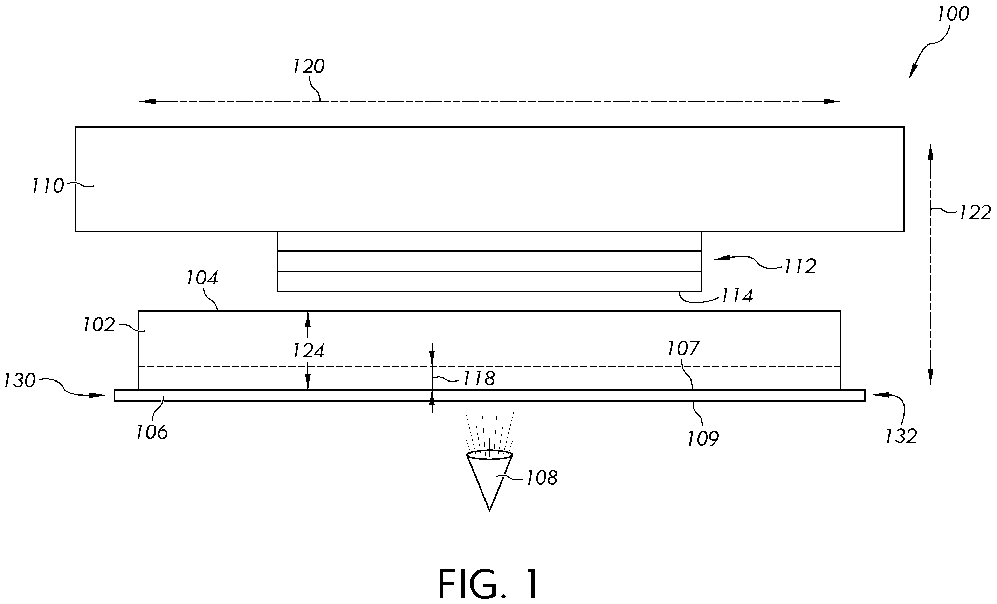

Referring to the drawings wherein identical reference numerals denote the same elements throughout the various views, FIGS. 1-5 schematically depict an additive manufacturing apparatus 100 and a two-phase additive manufacturing apparatus 101 for carrying out an additive manufacturing and cleaning method 300, 400 in which material deposition and subsequent removal of any extraneous cured material is driven by movement of a build plate 110 and movement of a foil sheet 106. As will be explained in more detail below, it will be understood that other embodiments and configurations of equipment may be used to carry out the methods described herein. The exemplary apparatus 100 includes at least a build plate 110 having a build surface 114, the foil sheet 106 retaining a cast layer 102, and an electromagnetic source 108. Each of these components will be described in more detail below.

Referring to FIG. 1, depicted is an illustrative additive manufacturing apparatus 100. The apparatus 100 includes the build plate 110 that is moveable along a first axis 122 (e.g., a vertical axis or a substantially vertical axis). The build plate 110 is vertically spaced above a first side 107 of the foil sheet 106 and may be movable to selectively position the build plate 110 closer to or further from the foil sheet 106. The build plate 110 is a structure defining the build surface 114, which is oriented substantially parallel to a second axis 120 (e.g., a horizontal axis or substantially horizontal axis). The build surface 114 may be defined at a lowermost portion of the build plate 110 along the first axis 122 proximate the foil sheet 106. In embodiments, the build plate 110 may further include an actuator for imparting vertical movement to the build plate 110 along the first axis 122. The actuator may drive the vertical movement of the build plate 110 through any applicable mechanical means such as, but not limited to, pneumatic actuators, hydraulic actuators, ballscrew electric actuators, linear electric actuators, stepper motors, delta drives, or the like. In some embodiments, the build plate 110 may also be movable along a second axis 120. In such embodiments, the build plate 110 may further include an actuator for imparting horizontal movement to the build plate 110 along the second axis 120.

As depicted in FIGS. 1-5 and as discussed herein, the first axis 122 is a vertical axis or a substantially vertical axis extending between the foil sheet 106 and the build plate 110. The second axis 120 is a horizontal axis or substantially horizontal axis that extends along a length of both the build plate 110 and the foil sheet 106. The first axis 122 is normal to the second axis 120. As used herein, the terms "above" and "uppermost" refer to positions along first axis 122 proximate or towards the original position of the build plate 110. Additionally, the terms "below," "under," and "lowermost" refer to positions along the first axis 122 proximate or towards the foil sheet 106.

As shown in FIG. 1, the foil sheet 106 is positioned below the build plate 110 along the first axis 122. The foil sheet 106 includes the first side 107 and a second side 109 positioned opposite the first side 107. The foil sheet 106 is configured to be moveable or translatable along the second axis 120 from a first end 130 of the foil sheet 106 to a second end 132 of the foil sheet 106. The foil sheet 106 may be a non-static surface that functions as a base of the apparatus 100. That is, the foil sheet 106 does not have a fixed position, but rather can move relative to its supports. In embodiments, the foil sheet 106 moves horizontally in relation to the fixed horizontal position of the build plate 110 to selectively position various portions of the foil sheet 106 underneath the build plate 110. In embodiments, the portions of the foil sheet 106 that are positioned beyond the first end 130 and the second end 132 may be engaged with rollers (not shown) or other moving elements. The foil sheet 106 may be positioned to maintain tension between the rollers, at least between the first end 130 and the second end 132, to wind the foil sheet 106 from one roller to another and translate the foil sheet 106 beneath the build plate 110. In embodiments, a portion of the foil sheet 106 that is extending between the rollers may be supported by one or more mechanical supports positioned below the foil sheet 106 along the first axis 122. Suitable mechanical supports (tables, frames, brackets, etc.-not shown) may be provided to support the foil sheet 106 and/or the rollers. Translation of the foil sheet 106 may be a linear movement along the second axis 120 or the foil sheet 106 may be moved along a curved or otherwise sloped track by the rollers. The foil sheet 106 moves or translates so that the foil sheet 106 proceeds from the first end 130 to the second end 132. It should be understood, however, that the direction of travel of the foil sheet 106 may be reversed such that foil sheet 106 proceeds from the second end 132 to the first end 130. The rollers may be driven by any appropriate means such as any combination of motors, actuators, feedback sensors, and/or user interface controls known to those of ordinary skill. In embodiments, the foil sheet 106 may be translated at a speed of greater than or equal to 25 millimeters per second (mm/s) relative to the build plate 110, greater than or equal to 50 mm/s relative to the build plate 110, greater than or equal to 75 mm/s relative to the build plate 110. In embodiments, the foil sheet 106 may be translated at a speed of less than or equal to 150 millimeters per second (mm/s) relative to the build plate 110, less than or equal to 125 mm/s relative to the build plate 110, or even less than or equal to 100 mm/s relative to the build plate 110. However, other speeds are contemplated and included in the scope of the present disclosure.

The dimensions of the foil sheet 106 may extend beyond the dimensions of the build plate 110 and the build surface 114 positioned thereon. For instance, the foil sheet 106 may have a larger length along the second axis 120 than the length of the build plate 110 and/or the build surface 114. In embodiments, the foil sheet 106 may have a larger width than the width of the build plate 110 and/or the build surface 114. In other embodiments, the width of the foil sheet 106 may directly or approximately correspond to the width of the build plate 110 or the build surface 114. The foil sheet 106 may have any suitable thickness to maintain mechanical integrity while engaging with the apparatus 100, as discussed herein.

In embodiments, the foil sheet 106, or selected portions thereof, may be transparent. As used herein, "transparent" refers to a material which allows radiant energy of a selected wavelength to pass through. For example, as described below, the radiant energy used for curing that can pass through the transparent material could be radiation in the ultraviolet (UV) spectrum (e.g., having a wavelength of about 100 nanometers (nm) to about 400 nm). Non-limiting examples of transparent materials include polymers, glass, and crystalline minerals such as sapphire or quartz.

The foil sheet 106 may be configured to be "non-stick", that is, resistant to adhesion of a cured slurry or cured resin. The non-stick properties may be embodied by a combination of variables such as the chemistry of the foil sheet 106, its surface finish, and/or applied coatings. In one example, a permanent or semi-permanent non-stick coating may be applied. One non-limiting example of a suitable coating is polytetrafluoroethylene ("PTFE"). In embodiments, all or a portion of the foil sheet 106 may incorporate a controlled roughness or surface texture (e.g. protrusions, dimples, grooves, ridges, etc.) with nonstick properties. In other embodiments, the foil sheet 106 may be made from an oxygen-permeable material.

As depicted in FIG. 1, a slurry is positioned on the first side 107 of the foil sheet 106 to form the cast layer 102 with a surface 104 positioned above the first side 107 of the foil sheet 106 along the first axis 122 at a surface height 124. In embodiments, the slurry includes a material which is radiant-energy curable and which is capable of binding together to form a printed part 112 when exposed to radiant energy at a sufficiently high energy level. As used herein, the term "radiant-energy curable" refers to any material which solidifies in response to the application of radiant energy of a particular frequency and energy level. For example, the slurry may include a known type of photo-curable material or photopolymer resin containing photo-initiator compounds functioning to trigger a polymerization reaction, causing the resin to change from a liquid state to a solid state. The composition of the slurry, including its chemistry and microstructure, may be selected as desired to suit a particular application. For example, the slurry may contain a filler material that is metallic, ceramic, polymeric, and/or organic. Mixtures of different compositions may be used.

Generally, the slurry should be flowable so that it can be efficiently applied to the foil sheet 106 and so that the cast layer 102 may settle at the surface height 124. The rheology of the slurry may be tuned according to the dimensions and configuration of the foil sheet 106. For instance, the slurry may have a sufficient viscosity to avoid excessive running after being prepared as the cast layer 102, yet the viscosity of the slurry cannot be too high so as to create excessive resistance that would prevent the build plate 110 from travelling freely within the cast layer 102 during the cleaning process.

The slurry may be manually positioned on the foil sheet 106 via pouring, siphoning, or other equivalent methods, or the slurry may be positioned on the foil sheet 106 by a controlled or an automated process, such as reservoir casting system, a hopper feeding system, a pumping system, or any other equivalent mechanism to form the cast layer 102 with a uniform surface height 124. The cast layer 102 is positioned to rest on the foil sheet 106 such that translation of the foil sheet 106 along the second axis 120 causes the cast layer 102 to move in conjunction with the foil sheet 106 from the first end 130 towards the second end 132. It should be understood that the direction of travel of the foil sheet 106 may be reversed such that the foil sheet 106 may also direct the cast layer 102 from the second end 132 toward the first end 130. In embodiments, the foil sheet 106 is translatable along the second axis 120 to position the cast layer 102 under the build plate 110, such that the build plate 110 may be lowered to contract a portion of the cast layer 102 positioned below the build plate 110 along the first axis 122.

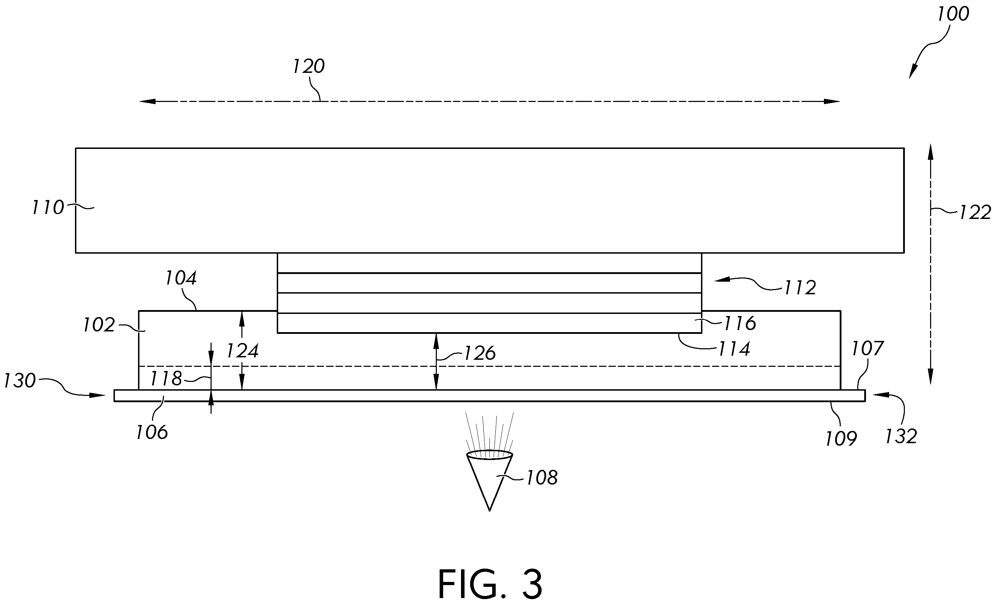

Still referring to FIG. 1, the electromagnetic source 108 is positioned below the foil sheet 106 along the first axis 122. The electromagnetic source 108 may be positioned to selectively apply radiant electromagnetic energy through the foil sheet 106 to the cast layer 102. The radiant energy may pass through the foil sheet 106 to form a segment 116 of the printed part 112 on the build surface 114 defined on the build plate 110 or defined on the printed part 112. While FIG. 3 depicts the build surface 114 as a surface of segment 116, it should be understood that the positioning of the build surface 114 is variable relative to the positioning of the build plate 110. Prior to the formation of the printed part 112, the build surface 114 is defined by the lowermost face of the build plate 110 relative to the first axis 122. Once a segment 116 has been formed on the build plate 110, the build surface 114 is defined on the lowermost face of the segment 116 relative to the first axis 122 to enable the formation of additional segments 116 to create the printed part 112. In embodiments, once the segment 116 has been cured to adhere to the previous build surface 114, the build plate 110 may be raised along the first axis 122 to define the new build surface 114 at the lowermost face of the most recently formed segment 116 at the cure depth 118 to iteratively produce another segment 116. The electromagnetic source 108 may be positioned to direct radiant electromagnetic energy towards the second side 109 of the foil sheet 106. Because the foil sheet 106 is transparent or partially transparent, radiant energy may pass through the second side 109 of the foil sheet 106 to interact with and cure portions of the cast layer 102. The apparatus 100 may be configured so that radiant energy passing through the foil sheet 106 may only have a sufficiently high energy to cure portions of the cast layer 102. The radiant energy passing through the cast layer 102 may only have a sufficient energy level to cure portions of the cast layer 102 at a cure depth 118, wherein the cure depth 118 is a portion of the cast layer 102 extending from the first side 107 of the foil sheet 106 to a height positioned within the cast layer 102. In embodiments, the apparatus 100 may be configured to control the height and positioning of the cure depth 118. For instance, the selective positioning of the electromagnetic source 108 along the first axis 122, the power level of the radiant energy applied by the electromagnetic source 108, and the transparency of the foil sheet 106 may be tuned to control the height of the cure depth 118 within the cast layer 102. The electromagnetic source 108 may include any device or combination of devices operable to generate and project radiant energy on the cast layer 102 in a suitable pattern, with a suitable energy level, and with other suitable operating characteristics to cure at least a portion of the cast layer 102 during the build process. In embodiments, the ratio of the surface height 124 of the cast layer 102 to the height of the cure depth 118 is greater than or equal to 1.5:1; greater than or equal to 2:1, greater than or equal to 3:1; greater than or equal to 4:1; or even greater than or equal to 5:1.

In embodiments, electromagnetic source 108 may be any device operable to generate a radiant energy patterned image of a suitable energy level and to cure a portion of the cast layer 102. As used herein, the term "patterned image" refers to a projection of radiant energy comprising an array of individual pixels. Non-limiting examples of patterned imaged devices include a DLP projector or another digital micromirror device, a 2D array of LEDs, a 2D array of lasers, or optically addressed light valves. In embodiments, the electromagnetic source 108 may be any device operable to generate a beam of a suitable energy level and with suitable frequency characteristics to cure at least a portion of the cast layer 102. In one non-limiting embodiment, the electromagnetic source 108 is a UV flash lamp.

The electromagnetic source 108 may include or be positioned to interact with one or more light-manipulating elements such as mirrors, prisms, optical filters, splitters, optical fibers, photo-optical sensors, and/or lenses. In embodiments, the electromagnetic source 108 may be and is provided with suitable actuators, and arranged so that the radiant energy emitted from the electromagnetic source 108 can be transformed into a pixelated image in an X-Y plane coincident with the second side 109 of the foil sheet 106 and the portion of the cast layer 102 proximate the foil sheet 106. In some embodiments, the electromagnetic source 108 may be a commercially-available DLP projector. Furthermore, the electromagnetic source 108 may incorporate additional means such as actuators, motors, mirrors, etc. configured to selectively control the application location of the applied radiant energy. Stated another way, the electromagnetic source 108 may initially apply radiant energy at a first position along the second side 109 of the foil sheet 106 and may adaptively vary the position of the applied radiant energy to a second position along the second side 109 of the foil sheet 106 to cure a different portion of the cast layer 102. This permits a single electromagnetic source 108 to cure a larger portion of the cast layer 102, for example. In embodiments, the electromagnetic source 108 may apply radiant energy to two or more separate foil sheets 106. In other embodiments, more than one electromagnetic source 108 may be used to apply radiant energy to the foil sheet 106.

Alternatively, the electromagnetic source 108 may be a "scanned beam apparatus" used herein to refer generally to any device operable to generate a radiant energy beam of suitable energy level and other operating characteristics to cure portions of the cast layer 102 and to scan the beam over the second side 109 of the foil sheet 106 in a desired pattern. In such embodiments, the electromagnetic source 108 may include any device operable to generate a beam of suitable power and other operating characteristics to cure a portion of the cast layer 102. Non-limiting examples of suitable electromagnetic sources 108 include lasers or electron beam guns. Other types of scanned beam apparatuses may be used. For example, scanned beam sources using multiple build beams are known, as are scanned beam sources in which the electromagnetic source 108 itself is movable by way of one or more actuators.

Additionally, as depicted in FIG. 1, the apparatus 100 may further include the printed part 112 formed on build surface 114.. Each segment 116 of the printed part 112 may be formed on the build surface 114, defined on the lowermost surface of the build plate 110 or defined on the lowermost surface of the printed part 112, by positioning a portion of the cast layer 102 proximate the build surface 114 and activating the electromagnetic source 108 to cure the slurry at the interface of the cast layer 102 and the build surface 114. In so doing, a cured portion of the cast layer 102 solidifies and adheres to the build surface 114 to form a portion of the printed part 112. Referring now to FIG. 3, the process of curing a portion of the printed part 112 is done iteratively such that a plurality of segments 116 (e.g., layers) of the printed part 112 may be cured one after the other on the build surface 114 to form the completed printed part 112. Put another way, in embodiments, the printed part 112 is formed from the plurality of segments 116 that are iteratively formed to create the resultant printed part 112. In embodiments, the segments 116 may have identical shapes, thicknesses, and compositions or the segments 116 may have variable shapes, thicknesses, and/or compositions to design the resulting printed part 112 for its intended purpose.

Due to the strength of the adherence of the printed part 112 once cured, the printed part 112 generally moves together with the build plate 110. In embodiments, the positioning of the build surface 114 is variable relative to the positioning of the build plate 110. Prior to the formation of the printed part 112, the build surface 114 is defined by the lowermost face of the build plate 110 relative to the first axis 122. Once a segment 116 has been formed on the build plate 110 , the build surface 114 is defined on the lowermost face of the printed part 112 relative to the first axis 122 to enable the formation of additional segments 116 to create the printed part 112. In embodiments, the build plate 110 is controlled along the first axis 122 and the electromagnetic source 108 applies radiant energy to iteratively form two or more segments 116 of the printed part 112. In other embodiments, the printed part 112 is made from a single cured segment 116.

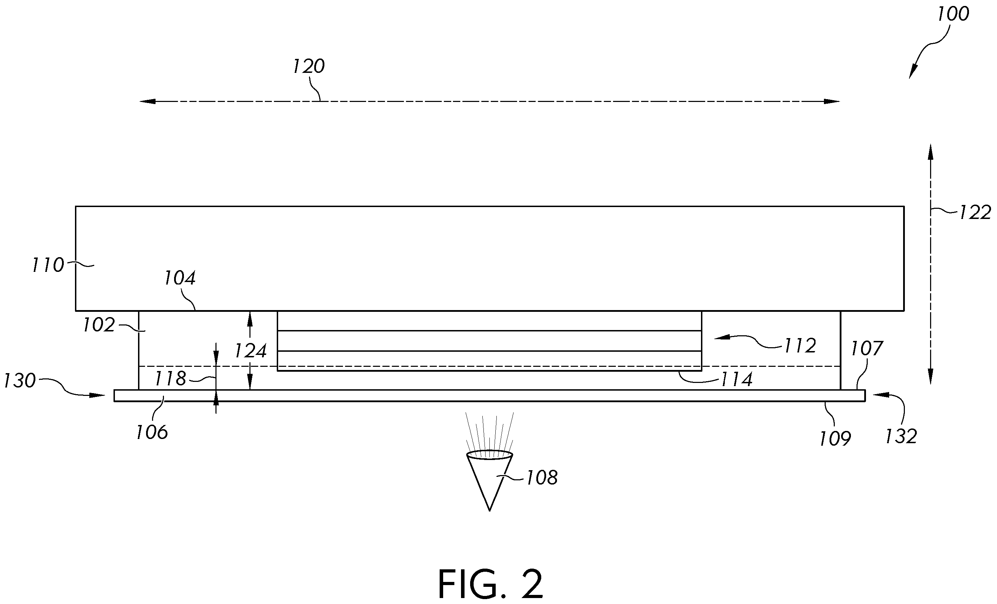

Examples of the operation of the apparatus 100 will now be described in detail. As depicted in FIG. 2, the apparatus 100 is configured to vary the position of the build plate 110 along the first axis 122 to place the build surface 114 below the surface 104 of the cast layer 102. The build plate 110 is lowered to position the build surface 114 at a vertical height at the cure depth 118 and proximate the foil sheet 106. The electromagnetic source 108 applies radiant energy at least to a portion of the cast layer 102 at the cure depth 118 to form the segment 116 (FIG. 3) of the printed part 112 on the build surface 114. In embodiments, once the segment 116 has been cured to adhere to the build surface 114, the build plate 110 may be raised along the first axis 122 to position the new build surface 114 positioned at the lowermost face of the segment 116 at the cure depth 118 to iteratively produce another segment 116. The printed part 112 constitutes the combination of each of the iteratively printed segments 116. In embodiments, the electromagnetic source 108 may be switched off as the vertical position of the build plate 110 is varied and may be switched on once the build surface 114 has been positioned at the cure depth 118 to cure a new segment 116. In other embodiments, the electromagnetic source 108 may remain on continuously and the build plate 110 may be slowly raised in a continuous manner to create each segment 116 of the printed part 112.

Referring to FIGS. 2-3, in embodiments the thickness of the segments 116 may be uniform or the thickness of the segments 116 may be varied. The thickness of each segment 116 is defined by some combination of the cure depth 118 and the movement of the build plate 110. For example, the build plate 110 could be positioned along the first axis 122 such that the build surface 114 just reaches the cure depth 118 to cure a segment 116 with a relatively large thickness, or the build plate 110 could be positioned at the cure depth 118 such that the segment 116 cures on the build surface 114 with less than its maximum available thickness. The thickness of each segment 116 may affect the speed of the additive manufacturing process and the resolution of the resulting printed part 112. The thickness of the segment 116 may be variable, with a larger segment 116 thickness being used to speed the process in portions of the printed part 112 not requiring high accuracy, and a smaller segment 116 thickness being used where higher accuracy is required, at the expense of efficiency.

An appropriately manufactured printed part 112 would have a smooth surface with uniform segments 116 that only contain fully cured materials on the build surface 114. However, when curing the slurry to form a solid printed part 112 via application of radiant energy from the electromagnetic source 108, there is inevitably a gradient of energy intensity within the cast layer 102 that drops off from a focal point. This gradient may result in partially cured materials that may cling to the build surface 114 and disrupt the uniformity of each segment 116, adversely affecting the resulting mechanical properties of the printed part 112. As shown in FIG. 3, the printed part 112 may be cleaned to remove partially cured materials using a cleaning process, sometimes referred to as dragging. The build plate 110 is raised to position the build surface 114 at a cleaning height 126, wherein the cleaning height 126 is a vertical position above the cure depth 118 and below the surface height 124 of the cast layer 102. The printed part 112 may be cleaned by translating the foil sheet 106 along the second axis 120.

The translation of the foil sheet 106 serves two purposes. First, translation of the foil sheet 106 causes the slurry to flow around and interact with the printed part 112 to create an abrasive shear force capable of removing partially cured materials clinging to the build surface 114 to increase uniformity of each segment 116 and reduce a surface roughness of the printed part 112. Second, translation of the foil sheet 106 may position a new portion of the cast layer 102, free of any partially cured materials, under the build plate 110 to receive the build surface 114 to create a new segment 116. In embodiments, the segments 116 of the printed part 112 are formed prior to cleaning the printed part 112 by translating the foil sheet 106. In other embodiments, the build plate 110 may be raised to position the last segment 116 at the cleaning height 126 and the foil sheet 106 may be translated to clean the printed part 112 after forming each segment 116. In embodiments, the cleaning process may be solvent-free such that the abrasive shear force caused by the interaction of the flowing slurry may be sufficient to remove any partially cured materials without the need for a solvent that may alter the chemistry of the cast layer 102 or the printed part 112. Furthermore, the use of a solvent may alter the rheology of the cast layer 102, thereby disrupting the formation behavior of each segment 116 and potentially reducing the uniformity of the printed part 112.

As used herein, "cleaning" refers to the physical interaction between the cast layer 102 and the printed part 112 to apply a shear force to remove extraneous materials from the printed part 112. In some embodiments, the cleaning process involves alternating the direction of translation of the foil sheet 106 such that the foil sheet 106 moves from the first end 130 toward the second end 132 and moves from the second end 132 toward the first end 130 to vary the applied direction of the abrasive shear force of the slurry. In embodiments, the build plate 110 may be moved along the first axis 122 during the cleaning process to create additional shear forces on the printed part 112 within the cast layer 102 that may facilitate the removal of partially cured materials. The height of the build plate 110 may be oscillated along the first axis 122 such that the positioning of the printed part 112 is moved along the first axis 122, above the cure depth 118 but below the surface height 124 of the cast layer 102. In further embodiments, the build plate 110 may be raised along the first axis 122 to position the printed part 112 above the surface 104 of the cast layer 102. Accordingly, lowering the printed part 112 to reenter the cast layer 102 creates an additional shear force on the surfaces of the printed part 112 to remove any partially cured materials. Furthermore, in embodiments, the apparatus 100 may further impart ultrasonic waves to the cast layer 102 to facilitate the removal of partially cured materials from the printed part 112. Additionally, the apparatus 100 may include scrubbers or other additional mechanical features that interface with the printed part 112 to facilitate removal of partially cured materials.

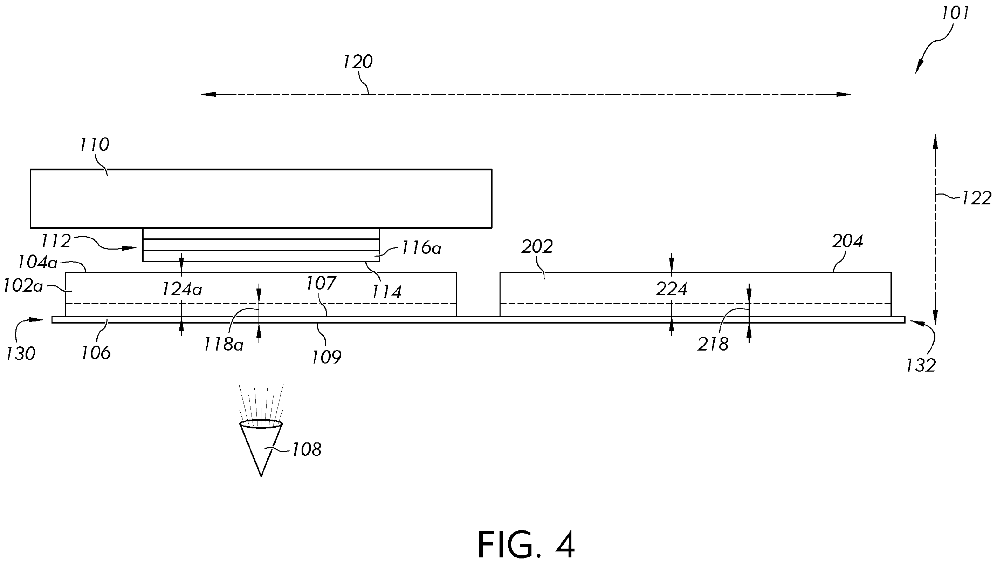

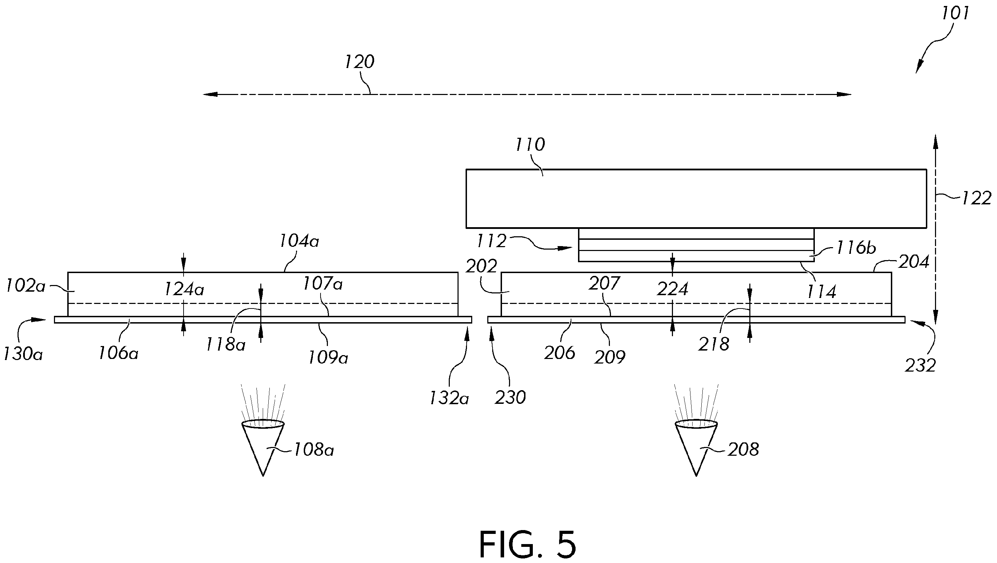

FIGS. 4-5 illustrate an alternative embodiment with a two-phase additive manufacturing apparatus 101 to produce a two-phase additively manufactured printed part 112. In embodiments, as depicted in FIG. 4, the apparatus 101 includes the foil sheet 106 retaining a first cast layer 102a including a first phase material and the foil sheet 106 retains a second cast layer 202 including a second phase material that is different than the first phase material, wherein the first cast layer 102a and the second cast layer 202 are segregated on the foil sheet 106. In some embodiments, as depicted in FIG. 5, the apparatus 101 includes a first foil sheet 106a that retains the first cast layer 102a including the first phase material and a second foil sheet 206 that retains the second cast layer 202 including the second phase material that is different than the first phase material. While FIGS. 1-4 illustrate a single foil sheet 106, it should be understood that embodiments of the apparatus 101 may include the first foil sheet 106a with a first side 107a and a second side 109a, and the second foil sheet 206 with a first side 207 and a second side 209. The apparatus 101 includes a first end 130a of the first foil sheet 106a and a first end 230 of the second foil sheet 206; a second end 132a of the first foil sheet 106a and a second end 232 of the second foil sheet 206. The first cast layer 102a includes a first surface 104a, a first surface height 124a, and a first cure depth 118a. Likewise, the second cast layer 202 includes a second surface 204, a second surface height 224, and a second cure depth 218. In embodiments, the apparatus 101 includes a single electromagnetic source 108 or the apparatus 101 includes a first electromagnetic source 108a and a second electromagnetic source 208.

In embodiments, the functioning of the apparatus 101 is identical to the functioning of the apparatus 100 as discussed herein for FIGS 1-3. The apparatus 101 merely includes additional components to facilitate additional steps wherein the build plate 110 is moveable to interface with both the first cast layer 102a as discussed above to create the printed part 112 and the build plate 110 is moveable to interface with the second cast layer 202 to create a new printed part 112 or additional segments 116 of a second phase material to expand upon the printed part 112 created in the first cast layer 102a. In embodiments, after the printed part 112 has been formed and cleaned as described above with reference to FIG. 1-3, the build plate 110 may move to be positioned above a different portion of the foil sheet 106 or above the second foil sheet 206 along the first axis 122 and additional segments 116 of the second phase material may be cured on the build surface 114 of the printed part 112. In other embodiments, the build plate 110 may transfer between the first cast layer 102a and the second cast layer 202 multiple times to selectively cure one or more first segments 116a comprising the first phase material and one or more second segments 116b comprising the second phase material at specific locations within the printed part 112 to achieve a specific structure or specific properties of the resulting printed part 112.

Prior to transferring from the first cast layer 102a to the second cast layer 202 or the second cast layer 202 to the first cast layer 102a, the printed part 112 is cleaned in the first cast layer 102 or the second cast layer 202 with the corresponding material to the most recently printed segment 116. For instance, the printed part 112 that includes the most recent segment 116 cured from the first phase material in the first cast layer 102a will be cleaned in the first cast layer 102a prior to positioning the build plate 110 over the second cast layer 202 to create additional segments 116 of the second phase material. Accordingly, any partially cured first phase material removed from the build surface 114 will remain in the first cast layer 102a and will not be unintentionally transported to the second cast layer 202 to contaminate the second cast layer 202. By reducing the contamination between the first cast layer 102a and the second cast layer 202, the printed part 112 may be formed in a way that allows for the creation of compositionally distinct segments 116 that do not contain impurities that may inhibit layer uniformity and the mechanical properties of the printed part 112.

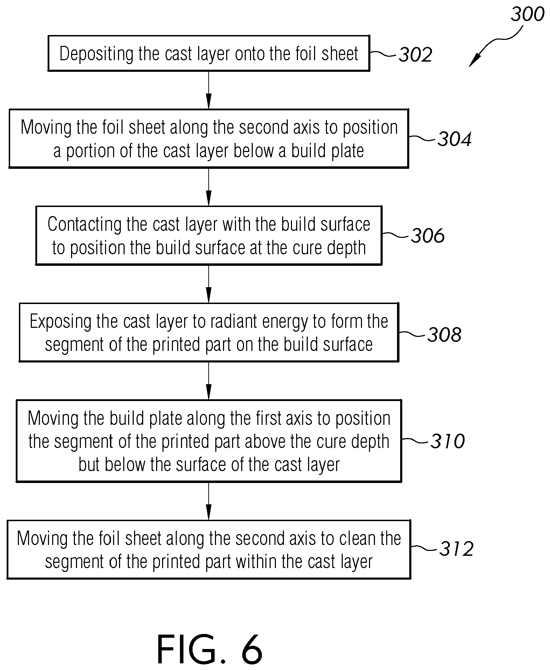

FIG. 6 depicts a block diagram of an illustrative method 300 for forming and cleaning an additively manufactured part using the apparatus 100 (FIG. 1). At block 302, the method 300 includes depositing the cast layer 102 onto the first side 107 of the foil sheet 106. At block 304, the method 300 further includes moving the foil sheet 106 along the second axis 120 to position a portion of the cast layer 102 below the build plate 110 such that the build plate 110 can be lowered along the first axis 122 to directly interface the cast layer 102 at the build surface 114. At block 306, the method 300 further includes contacting the cast layer 102 with the build surface 114 of to position the build surface 114 at the cure depth 118 below the surface height 124 of the cast layer 102 and proximate the foil sheet 106.

At block 308, the method 300 includes exposing the cast layer 102 to radiant energy to form the segment 116 of the printed part 112 on the build surface 114. In embodiments, the radiant energy is emitted from the electromagnetic source 108 positioned below the foil sheet 106 and facing the second side 109 of the foil sheet 106 to cure a curable material within the cast layer 102 and form the segment 116 of the printed part 112 on the build surface 114 at the cure depth 118. At block 310, the method 300 further includes moving the build plate 110 along the first axis 122 to position the segment 116 of the printed part 112 above the cure depth 118 but below the surface 104 of the cast layer 102. At block 312, the method 300 includes moving the foil sheet 106 along the second axis 120 to clean the segment 116 of the printed part 112 within the cast layer 102 to clean the segment 116 of the printed part 112 within the cast layer 102. Cleaning the segment 116 within the cast layer 102 may reduce a surface roughness of the printed part 112 by removing impurities and other uncured or partially cured materials from the build surface 114.

In embodiments, the method 300 may further include repeating the step of moving the build plate 110 along the first axis 122 and the emitting the radiant energy from the electromagnetic source 108 to iteratively form two or more segments 116 of the printed part 112. In some embodiments, the method 300 includes cleaning the printed part 112 by translating the foil sheet 106 to drag the printed part 112 in the cast layer 102 after the formation of each segment 116. In alternative embodiments, the method 300 includes cleaning the printed part 112 by translating the foil sheet 106 to drag the printed part 112 after the segments 116 of the printed part 112 have been formed. In some embodiments, the method 300 further includes moving the build plate 110 along the first axis 122 to oscillate vertical position of the build plate 110 above the cure depth 118 and below the surface 104 of the cast layer 102 to induce an additional interaction between the cast layer 102 and the printed part 112 to clean the segment 116 of the printed part 112 and remove impurities and other uncured or partially cured materials from the printed part 112. In embodiments, translating the foil sheet 106 further includes alternating a direction of translation of the foil sheet 106 such that the foil sheet 106 moves from the first end 130 toward the second end 132 and moves from the second end 132 toward the first end 130.

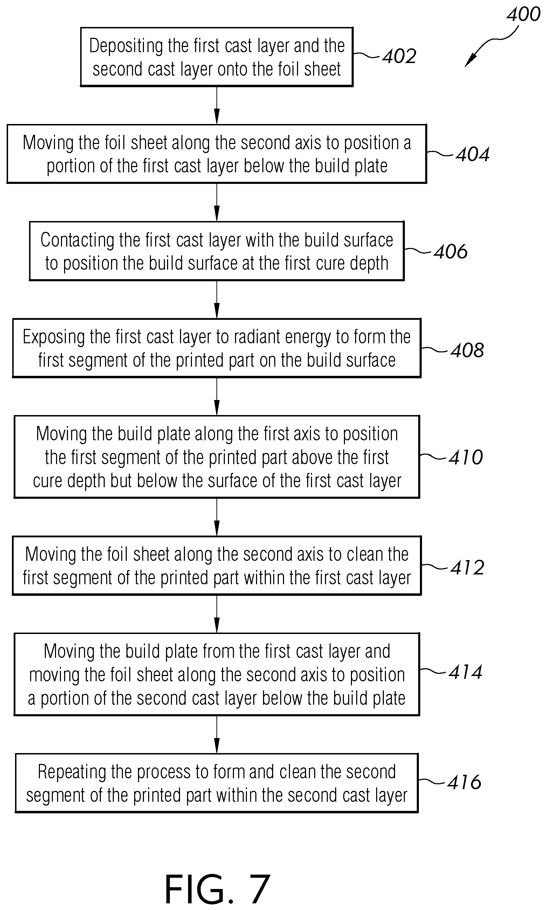

FIG. 7 depicts a block diagram of an illustrative method 400 for forming and cleaning a two-phase additively manufactured part using the two-phase additive manufacturing apparatus 101 (FIGS. 4-5). At block 402, the method 400 includes depositing the first cast layer 102a and the second cast layer 202 onto the foil sheet 106. At block 404, the method 400 further includes moving the foil sheet 106 along the second axis 120 to position a portion of the first cast layer 102a below the build plate 110. At block 406, the method 400 further includes contacting the first cast layer 102a with the build surface 114 to position the build surface 114 at the first cure depth 118a.

At block 408, the method 400 includes exposing the first cast layer 102a to radiant energy to form a first segment 116a of the printed part 112 on the build surface 114. In embodiments, the radiant energy is emitted from the first electromagnetic source 108a or the second electromagnetic source 208 positioned below the foil sheet 106 and facing the second side 109 of the foil sheet 106 to cure a first phase curable material within the first cast layer 102a and form the first segment 116a of the printed part 112 on the build surface 114 at the first cure depth 118a. At block 410, the method 400 further includes moving the build plate 110 along the first axis 122 to position the first segment 116a of the printed part 112 above the first cure depth 118a but below the first surface 104a of the first cast layer 102a. At block 412, the method 400 includes moving the foil sheet 106 along the second axis 120 to clean the first segment 116a of the printed part 112 within the first cast layer 102a. Cleaning the first segment 116a within the first cast layer 102a may reduce a surface roughness of the printed part 112 by removing impurities and other uncured or partially cured first phase materials from the build surface 114. At block 414, the method 400 includes moving the build plate 110 from the first cast layer 102a and moving the foil sheet 106 along the second axis 120 to position a portion of the second cast layer 202 below the build plate 110.

At block 416, the method 400 includes repeating the process to form and clean a second segment 116b of the printed part 112 within the second cast layer 202. The method 400 further includes translating the foil sheet 106 along the second axis 120 to position a portion of the second cast layer 202 beneath the build plate 110 such that the build plate 110 can be lowered along the first axis 122 to directly interface the second cast layer 202 at the build surface 114. The method 400 further includes moving the build plate 110 along the first axis 122 to position the build surface 114 beneath a second surface 204 of the second cast layer 202 such that the build surface 114 is positioned at the second cure depth 218 below the second surface height 224 of the second cast layer 202 and proximate the foil sheet 106.

The method 400 further includes emitting radiant energy from the electromagnetic source 108 or the second electromagnetic source 208 positioned below the second foil sheet 206 and facing a second side 209 of the second foil sheet 206 to cure a second phase curable material within the second cast layer 202 and form the second segment 116b of the printed part 112 on the build surface 114 at the second cure depth 218. The method 400 further includes moving the printed part 112 by raising the build plate 110 along the first axis 122 to position the second segment 116b of the printed part 112 above the second cure depth 218 and below the second surface height 224 of the second cast layer 202. The method 400 further includes moving the second foil sheet 206 along the second axis 120 to induce an interaction between the second cast layer 202 and the printed part 112 to clean the second segment 116b of the printed part 112 within the second cast layer 202 to reduce a surface roughness of the printed part 112 by removing impurities and other uncured or partially cured second phase materials from the build surface 114.

In embodiments, the method 400 may further include repeating the steps of moving the build plate 110 along the first axis 122 and emitting the radiant energy from the electromagnetic source 108 to iteratively form two or more first segments 116a of the printed part 112 and two or more second segments 116b of the printed part 112. In some embodiments, the method 400 includes forming the two or more first segments 116a of the printed part 112 prior to the translating the first foil sheet 106a along the second axis 120 to clean the printed part 112 in the first cast layer 102a and forming the two or more second segments 116b of the printed part 112 prior to the translating the second foil sheet 206 along the second axis 120 to clean the printed part 112 in the second cast layer 202. While in alternative embodiments, the method 400 includes cleaning the printed part 112 in the first cast layer 102a by translating the first foil sheet 106a along the second axis 120 after forming each first segment 116a and cleaning the printed part 112 in the second cast layer 202 by translating the second foil sheet 206 along the second axis 120 after forming each second segment 116b.

In some embodiments, the method 400 further includes moving the build plate 110 along the first axis 122 to oscillate the height of the build plate 110 to vary a vertical position of the printed part 112 above the first cure depth 118a but below the first surface height 124a of the first cast layer 102a and above the second cure depth 218 but below the second surface height 224 of the second cast layer 202 to induce an additional interaction between the first cast layer 102a and the second cast layer 202 and the printed part 112 to clean the first segments 116a and second segments 116b from the printed part 112 respectively. In embodiments, translating the foil sheet 106 includes alternating a direction of translation of the foil sheet 106 such that the foil sheet 106 moves from the first end 130 toward the second end 132 and moves from the second end 132 toward the first end 130.

The methods and apparatuses described herein has several advantages over conventional methods. In particular, the methods discussed herein clean the surfaces of additively printed layers, improving dimensional accuracy, reducing surface roughness, and forming a more uniform interlayer microstructure than conventional additively printed materials. The methods reduce the contamination of printed materials formed from two distinct cast layers while eliminating the need for a cleaning solvent or mechanical cleaning apparatus that can increase cost, inhibit the mechanical properties, and/or slow production.

It should now be understood that the present disclosure relates to and methods for forming and cleaning additively manufactured parts. All of the features disclosed in this specification (including any accompanying clauses, abstract and drawings), and/or all of the steps of any method or process so disclosed, may be combined in any combination, except combinations where at least some of such features and/or steps are mutually exclusive.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Each of the components described above may be combined or added together in any permutation to define embodiments disclosed herein. Accordingly, the present specification is intended to embrace all such alterations, modifications and variations that fall within the spirit and scope of the appended clauses. Furthermore, to the extent that the term "includes" is used in either the detailed description or the clauses, such term is intended to be inclusive in a manner similar to the term "comprising" as "comprising" is interpreted when employed as a transitional word in a clause.

It is noted that the various embodiments described herein may include other components and/or functionality. It is further noted that while various embodiments refer to an additive manufacturing apparatus and method, various other systems may be utilized in view of embodiments described herein. The present disclosure is not restricted to the details of the foregoing embodiment(s). The present disclosure extends to any novel one, or any novel combination, of the features disclosed in this specification (including any accompanying clauses, abstract and drawings), or to any novel one, or any novel combination, of the steps of any method or process so disclosed.

Additional aspects of the present disclosure are provided by the subject matter of the following clauses:

A method for cleaning an additively manufactured part, the method comprising: contacting a cast layer with a build plate, wherein the cast layer is disposed on a first side of a foil sheet and has a surface height spaced vertically above the foil sheet along a first axis and wherein the build plate is vertically spaced above the foil sheet along the first axis; moving the build plate along the first axis to position a build surface at a cure depth below the surface height of the cast layer and to form a segment of a printed part on the build surface; and moving the build plate along the first axis to position the segment of the printed part above the cure depth and translating the foil sheet along a second axis to clean the segment of the printed part within the cast layer.

The method of any preceding clause, wherein the cleaning the printed part comprises a solvent-free process.

The method of any preceding clause, further comprising repeating the moving the build plate along the first axis to iteratively form two or more segments of the printed part.

The method of any preceding clause, further comprising forming each of the two or more segments of the printed part prior to translating the foil sheet along the second axis to clean the segment of the printed part.

The method of any preceding clause, further comprising translating the foil sheet along the second axis to clean the segment of the printed part after forming each segment of the two or more segments of the printed part.

The method of any preceding clause, further comprising removing the printed part from the cast layer following cleaning the printed part after forming each segment of the two or more segments.

The method of any preceding clause, further comprising oscillating the height of the build plate to vary the position of the printed part above the cure depth and below the surface of the cast layer.

The method of any preceding clause, wherein translating the foil sheet along the second axis to clean the segment of the printed part further comprises alternating a direction of translation of the foil sheet such that the foil sheet moves from a first end toward a second end and moves from the second end toward the first end.

The method of any preceding clause, wherein the surface height of the cast layer is about 1.5 to 3 times greater than a height of the cure depth.

The method of any preceding clause, wherein translating the foil sheet along the second axis comprises laterally moving the foil sheet at a speed greater than or equal to 25 mm/s and less than or equal to 150 mm/s relative to the build plate.

A method for cleaning an additively manufactured two-phase material, the method comprising: contacting a first cast layer and a second cast layer with a build plate, wherein the first cast layer is disposed on a first side of a foil sheet and has a first surface height spaced vertically above the foil sheet along a first axis, wherein the second cast layer is disposed on the first side of the foil sheet and has a second surface height spaced vertically above the foil sheet along the first axis, and wherein the build plate is vertically spaced above the foil sheet along the first axis; moving the build plate along the first axis to position a build surface at a first cure depth below the first surface height of the first cast layer and forming a first segment of a printed part on the build surface; moving the build plate along the first axis to position the first segment of the printed part above the first cure depth and translating the foil sheet along a second axis to clean the first segment of the printed part within the first cast layer; moving the build plate along the first axis to position the build surface at a second cure depth below the second surface height of the second cast layer and forming a second segment of the printed part on the build surface; and moving the build plate along the first axis to position the second segment of the printed part above the second cure depth and translating the foil sheet along the second axis to clean the second segment of the printed part within the second cast layer.

The method of any preceding clause, wherein the translating the foil sheet along the second axis to clean the printed part includes cleaning via a solvent-free process.

The method of any preceding clause, further comprising repeating the moving the build plate along the first axis to iteratively form two or more first segments of the printed part and two or more second segments of the printed part.

The method of any preceding clause, further comprising forming the two or more first segments of the printed part prior to the translating the foil sheet along the second axis to clean the printed part in the first cast layer and forming the two or more second segments of the printed part prior to the translating the foil sheet along the second axis to clean the printed part in the second cast layer.

The method of any preceding clause, further comprising removing the printed part from the first cast layer following the cleaning the printed part after forming each first segment and removing the printed part from the second cast layer following the cleaning the printed part after forming each second segment.

The method of any preceding clause, further comprising cleaning the printed part in the first cast layer after forming each first segment and cleaning the printed part in the second cast layer after forming each second segment.

The method of any preceding clause, further comprising oscillating the height of the build plate to vary a vertical position of the printed part above the first cure depth but below the first surface height of the first cast layer and above the second cure depth but below the second surface height of the second cast layer.

The method of any preceding clause, wherein translating the foil sheet along the second axis further comprises alternating a direction of translation of the foil sheet such that the foil sheet moves from a first end toward a second end and moves from the second end toward the first end.

The method of any preceding clause, wherein the first surface height of the first cast layer is about 1.5 to 3 times greater than a height of the first cure depth and the second surface height of the second cast layer is about 1.5 to 3 times greater than a height of the second cure depth.

The method of any preceding clause, wherein translating the foil sheet along the second axis comprises laterally moving the foil sheet at a speed that is greater than or equal to 25 mm/s and less than or equal to 150 mm/s relative to the build plate.

The method of any preceding clause, further comprising emitting a radiant energy from an electromagnetic source facing a second side of the foil sheet to form a segment of a printed part on the build surface

The method of any preceding clause, further comprising emitting a radiant energy from an electromagnetic source facing the second side of the foil sheet to form the first segment of the printed part on the build surface and emitting the radiant energy from the electromagnetic source facing the second side of the foil sheet to form the second segment of the printed part on the build surface.

The method of any preceding clause, wherein the first axis is transverse to the second axis.

The method of any preceding clause, wherein the build surface is oriented substantially parallel to the second axis.

The method of any preceding clause, further comprising moving the build plate along the first axis to control a vertical position of the printed part and moving the build plate along the second axis to control a horizontal position of the printed part.

The method of any preceding clause, wherein the electromagnetic source is selectively positionable along the first axis or the second axis.

The method of any preceding clause, wherein the electromagnetic source comprises a first electromagnetic source and a second electromagnetic source.

The method of any preceding clause, wherein the foil sheet comprises a first foil sheet retaining the first cast layer and a second foil sheet retaining the second cast layer.

The method of any preceding clause, wherein the first cast layer and the first segment comprise a first phase material.

The method of any preceding clause, wherein the second cast layer and the second segment comprise a second phase material.

## Claims

1. A method for cleaning an additively manufactured part, the method comprising:
contacting a cast layer (102) with a build plate (110) (110), wherein the cast layer (102) is disposed on a first side (107) of a foil sheet (106) and has a surface height (124) spaced vertically above the foil sheet (106) along a first axis (122) and wherein the build plate (110) is vertically spaced above the foil sheet (106) along the first axis (122);
moving the build plate (110) along the first axis (122) to position a build surface (114) at a cure depth (118) below the surface height (124) of the cast layer (102) and to form a segment (116) of a printed part (112) on the build surface (114); and
moving the build plate (110) along the first axis (122) to position the segment (116) of the printed part (112) above the cure depth (118) and translating the foil sheet (106) along a second axis (120) to clean the segment (116) of the printed part (112) within the cast layer (102).

2. The method of claim 1, wherein the cleaning the printed part (112) comprises cleaning via a solvent-free process.

3. The method of claim 1 or claim 2, further comprising repeating the moving the build plate (110) along the first axis (122) to iteratively form two or more segments (116) of the printed part (112).

4. The method of any preceding claim, further comprising forming each of the two or more segments (116) of the printed part (112) prior to translating the foil sheet (106) along the second axis (120) to clean the segment (116) of the printed part (112).

5. The method of any preceding claim, further comprising translating the foil sheet (106) along the second axis (120) to clean the segment (116) of the printed part (112) after forming each segment (116) of the two or more segments (116) of the printed part (112).

6. The method of any preceding claim, further comprising oscillating a height of the build plate (110) to vary the position of the printed part (112) above the cure depth (118) and below a surface height (124) of the cast layer (102).

7. The method of any preceding claim, wherein translating the foil sheet (106) along the second axis (120) to clean the segment (116) of the printed part (112) further comprises alternating a direction of translation of the foil sheet (106) such that the foil sheet (106) moves from a first end (130) toward a second end (132) and moves from the second end (132) toward the first end (130).

8. A method for cleaning an additively manufactured two-phase material, the method comprising:
contacting a first cast layer (102a) and a second cast layer (202) with a build plate (110), wherein the first cast layer (102a) is disposed on a first side (107) of a foil sheet (106) and has a first surface height (124a) spaced vertically above the foil sheet (106) along a first axis (122), wherein the second cast layer (202) is disposed on the first side (107) of the foil sheet (106) and has a second surface height (224) spaced vertically above the foil sheet (106) along the first axis (122), and wherein the build plate (110) is vertically spaced above the foil sheet (106) along the first axis (122);
moving the build plate (110) along the first axis (122) to position a build surface (114) at a first cure depth (118a) below the first surface height (124a) of the first cast layer (102a) and forming a first segment (116a) of a printed part (112) on the build surface (114);
moving the build plate (110) along the first axis (122) to position the first segment (116a) of the printed part (112) above the first cure depth (118a) and translating the foil sheet (106) along a second axis (120) to clean the first segment (116a) of the printed part (112) within the first cast layer (102a);
moving the build plate (110) along the first axis (122) to position the build surface (114) at a second cure depth (218) below the second surface height (224) of the second cast layer (202) and forming a second segment (116b) of the printed part (112) on the build surface (114); and
moving the build plate (110) along the first axis (122) to position the second segment (116b) of the printed part (112) above the second cure depth (218) and translating the foil sheet (106) along the second axis (120) to clean the second segment (116b) of the printed part (112) within the second cast layer (202).

9. The method of claim 8, wherein the translating the foil sheet (106) along the second axis (120) to clean the printed part (112) includes cleaning via a solvent-free process.

10. The method of claim 8 or 9, further comprising repeating the moving the build plate (110) along the first axis (122) to iteratively form two or more first segments (116a) of the printed part (112) and two or more second segments (116b) of the printed part (112).

11. The method of any preceding claim, further comprising forming the two or more first segments (116a) of the printed part (112) prior to the translating the foil sheet (106) along the second axis (120) to clean the printed part (112) in the first cast layer (102a) and forming the two or more second segments (116b) of the printed part (112) prior to the translating the foil sheet (106) along the second axis (120) to clean the printed part (112) in the second cast layer (202).

12. The method of any preceding claim, further comprising removing the printed part (112) from the first cast layer (102a) following the cleaning the printed part (112) after forming each first segment (116a) and removing the printed part (112) from the second cast layer (202) following the cleaning the printed part (112) after forming each second segment (116b).

13. The method of any preceding claim, further comprising cleaning the printed part (112) in the first cast layer (102a) after forming each first segment (116a) and cleaning the printed part (112) in the second cast layer (202) after forming each second segment (116b).

14. The method of any preceding claim, further comprising oscillating a height of the build plate (110) to vary a vertical position of the printed part (112) above the first cure depth (118a) but below the first surface height (124a) of the first cast layer (102a) and above the second cure depth (218) but below the second surface height (224) of the second cast layer (202).

15. The method of any preceding claim, wherein translating the foil sheet (106) along the second axis (120) further comprises alternating a direction of translation of the foil sheet (106) such that the foil sheet (106) moves from a first end (130) toward a second end (132) and moves from the second end (132) toward the first end (130).
